# EUROPÄISCHE PATENTANMELDUNG

(11) **EP 1 705 552 A1**
(43) Veröffentlichungstag der Anmeldung: **27.09.2006**
(21) Anmeldenummer: 06075638.4
(22) Anmeldetag: 20.03.2006
(51) Int. Cl.: G06F 3/033

(54) **Interaktives Informationssystem und interaktives Verfahren**

(30) Priorität: 22.03.2005 DE 102005014088
(71) Anmelder: Art & Com AG, 10787 Berlin (DE)
(72) Erfinder: Sauter, Joachim, 10781 Berlin (DE); Mayer, Pavel, 10115 Berlin (DE); Monath, Gert, 13158 Berlin (DE); Sachse, Wolf-Dietrich, 13589 Berlin (DE)
(74) Vertreter: Gross, Felix

(57) **Zusammenfassung**

Interaktives Informationssystem, gekennzeichnet durch
a) ein Eingabemittel (10) zur gleichzeitigen Registrierung mindestens zweier physischer Kontakte (12, 13) mindestens eines Nutzers mit dem Eingabemittel (10),
b) mindestens zwei mit dem Eingabemittel (10) gekoppelte Abstandssensoren (1) zur Ermittlung und räumlichen Auflösung der einzelnen physischen Kontakte (12, 13) am Eingabemittel (10), wobei in Abhängigkeit von der räumlichen Auflösung der Kontakte (12, 13) am Eingabemittel (10) automatisch ein Kontaktsignal (2) generiert wird und die Kontaktsignale (2) zu einem Kontaktdatensatz (6) zusammengefasst werden,
c) ein Datenverarbeitungssystem (7) zur Verarbeitung des Kontaktdatensatzes (6), wobei in Abhängigkeit vom Inhalt des Kontaktdatensatzes (6) automatisch ein Ausgabedatensatz (8) generiert wird, der mittels einer Wiedergabevorrichtung (9) für die Nutzer des Eingabemittels (10) darstellbar ist, wobei d) der Ausgabedatensatz (8) Informationen enthält, die automatisch von der räumlichen Position der Kontakte (12, 13) abhängen. Damit ist es möglich, dass mehrere Nutzer gleichzeitig das Eingabemittel (10) bedienen können.

## Beschreibung

Die Erfindung betrifft ein interaktives Informationssystem nach Anspruch 1 und ein interaktives Verfahren gemäß Anspruch 13.

Es ist bekannt, dass ein Nutzer Eingaben über einen Touchscreen an ein Datenverarbeitungssystem übermittelt. Dabei ist vor einem Bildschirm eine Eingabevorrichtung, z.B. eine Folie, angeordnet, die den Kontakt eines Körperteils (z.B. Fingerspitze) räumlich registriert. Damit kann ermittelt werden, an welcher Stelle des Bildschirms ein Kontakt stattgefunden hat, wobei mit dieser Information eine Funktion des Datenverarbeitungssystems ausgelöst werden kann, die diesem räumlichen Bereich zugeordnet ist.

Eine vergleichbare Eingabevorrichtung ist auch in einer berührungslosen Variante, z.B. aus der DE 43 12 672 Al bekannt.

In beiden Fällen wird eine Berührung oder eine Annäherung eines Körperteils an einer einzigen Koordinate des Eingabesystems ermittelt und führt zur Auslösung der gewünschten Funktion des Datenverarbeitungssystems. Im Grunde sind diese bekannten Systeme nur eine Umsetzung des seit langem bekannten Cursorprinzips, bei dem immer genau eine, und nur eine, Koordinate angewählt werden kann.

Dabei ist es nachteilig, dass bereits zwei gleichzeitige Kontakte auf einem solchen Eingabesystem nicht mehr verarbeitet werden können. Berührt man z.B. mit zwei Fingern gleichzeitig einen Touchscreen, wird meist eine Interpolation zwischen den Positionen berechnet, was funktionell nutzlos ist. Auch lassen sich Bildschirme nur in beschränkter Größe herstellen, so dass die Nutzung für mehrere Nutzer gleichzeitig schwierig ist. Im Übrigen sind Bildschirme empfindlich gegen mechanische Einflüsse und gerade bei großen Flächen sehr teuer.

Will man ein Eingabemittel für mehrere Nutzer schaffen oder mehrere Kontakte für einen Nutzer schaffen, so muss ein neues Eingabesystem und ein neues Eingabeverfahren geschaffen werden. Genau dies ist die Aufgabe der vorliegenden Erfindung.

Diese Aufgabe wird erfindungsgemäß durch ein interaktives Informationssystem mit den Merkmalen des Anspruchs 1 gelöst.

Erfindungsgemäß weist das Informationssystem folgende Bauelemente auf:
a) Ein Eingabemittel zur gleichzeitigen Registrierung mindestens zweier physischer Kontakte, insbesondere eine definierte Annäherung an das Eingabemittel oder einer Berührung mindestens eines Nutzers mit dem Eingamindestens eines Nutzers mit dem Eingabemittel.
   Unter einem physischen Kontakt wird somit nicht nur ein direktes Berühren sondern auch eine Unterschreitung eines vordefinierbaren Mindestabstandes (definierte Annäherung) verstanden. Auch eine dermaßen definierte Annäherung ist ein Kontakt im Sinne dieses Patentes.
b) Ferner gehören mindestens zwei mit dem Eingabemittel gekoppelte Abstandssensoren zur Ermittlung und räumlichen Auflösung der einzelnen physischen Kontakte am Eingabemittel dazu, wobei in Abhängigkeit von der räumlichen Auflösung der Kontakte am Eingabemittel automatisch ein Kontaktsignal generiert wird und die Kontaktsignale zu einem Kontaktdatensatz zusammengefasst werden.
c) Schließlich gehört ein Datenverarbeitungssystem zur Verarbeitung des Kontaktdatensatzes zur Erfindung, wobei in Abhängigkeit vom Inhalt des Kontaktdatensatzes automatisch ein Ausgabedatensatz generiert wird, der mittels einer Wiedergabevorrichtung für die Nutzer des Eingabemittels darstellbar ist, wobei der Ausgabedatensatz Informationen enthält, die automatisch von der räumlichen Position der Kontakte abhängen.
d) eine Wiedergabevorrichtung für den Ausgabedatensatz, wobei die Wiedergabe des Ausgabedatensatzes zumindest teilweise auf dem Eingabemittel erfolgt.

Durch die Ausgestaltung des Eingabemittels und die darauf abgestimmte Datenverarbeitung ist es möglich, ein Eingabesystem zu schaffen, das von mehreren Benutzern gleichzeitig benutzt werden kann.

Durch die zumindest teilweise Wiedergabe des Ausgabedatensatzes (z.B. ein Bild) auf dem Eingabemittel entsteht eine Art geschlossener Regelkreis zwischen Eingabemittel und den Nutzern, die durch ihren Kontakt mit dem Eingabemittel den Ausgabedatensatz erzeugt haben. Der Inhalt des Ausgabedatensatzes wird durch Kontakt des Nutzers ausgelöst und durch das Datenverabeitungssystem zusammengestellt. Die Nutzer könnendas Ergebnis Ihrer Interaktion mit dem System zumindest teilweise selbst auf dem Eingabemittel erkennen und wiederum mit dem Eingabemittel interagieren.

Dabei ist es vorteilhaft, wenn mindestens ein Abstandssensor ein Kontaktsignal auslöst, wenn ein Körperteil eines Nutzers eine bestimmte Distanz zum Abstandssensor unterscheidet, insbesondere wenn ein direkter Kontakt erfolgt. Gerade wenn ein Nutzer das Eingabemittel nicht berührt, dadurch aber eine Aktion der Wiedergabevorrichtung ausgelöst wird, entsteht ein nachhaltiger Effekt beim Nutzer.

Vorteilhaft ist es, wenn mindestens ein Abstandssensor als kapazitiver Sensor ausgebildet ist. Ferner ist es vorteilhaft, wenn mindestens ein Abstandssensor den Abstand zu einem Körperteil des Nutzers mittels elektromagnetischer Strahlung ermittelt. Mit beiden Sensortypen lassen sich auch Annäherungen eines Körperteils an das Eingabemittel erfassen.

Es kann aber auch vorteilhaft sein, wenn mindestens ein Abstandssensor als Sensor für die direkte Berührung mit einem Körperteil des Benutzers ausgebildet ist.

Zur Auflösung räumlich naher Kontakte eines Nutzers ist es vorteilhaft, wenn mindestens zwei Abstandssensoren zur Verminderung der gegenseitigen Beeinflussung elektrisch gegeneinander abgeschirmt sind.

Dabei kann es alternativ oder zusätzlich vorteilhaft sein, wenn die Kontaktsignale mindestens zweier räumlich nahe beieinander liegender, insbesondere benachbarter Abstandssensoren zur Verbesserung der räumlichen Auflösung der Kontakte zeitlich versetzt auslesbar sind.

Für eine weitere Eingangsgröße für die Steuerung des Wiedergabegerätes ist es vorteilhaft, wenn mit mindestens einem Abstandssensor die Geschwindigkeit oder Beschleunigung eines Körperteils eines Nutzers relativ zum Eingabemittel erfassbar ist. Damit kann eine Ansteuerung des Wiedergabegerätes nicht nur über die räumliche Position, sondern auch in Abhängigkeit vom Bewegungsmuster des Nutzers erfolgen.

Eine vorteilhafte Anordnung der Abstandssensoren im Eingabemittel ist eine Matrix.

Das Eingabemittel kann vorteilhafterweise eine horizontale Fläche, vertikale Fläche und / oder eine gekrümmte Fläche aufweisen, wobei die Abstandssensoren an oder in dieser Fläche angeordnet sind. Somit kann das Eingabemittel auch sehr komplexe geometrische Strukturen aufweisen.

Ein besonderer optischer Effekt wird erzielt, wenn der Ausgabedatensatz, insbesondere ein Bilddatensatz, auf das zumindest teilfweise auf das Eingabemittel projizierbar ist. Der Nutzer sieht dabei den Effekt seiner Kontakte mit dem Eingabemittel unmittelbar.

Z.B. bei transparenten Eingabemitteln kann es vorteilhaft sein, wenn der Ausgabedatensatz zumindest teilweise mittels Rückprojektion auf das Eingabemittel projizierbar ist.

Die Aufgabe wird auch durch ein Verfahren gemäß Anspruch 13 mit den folgenden Merkmalen gelöst:
a) Mindestens zwei physische Kontakte mindestens eines Nutzers an einem Eingabemittel werden erfasst, wobei
b) die Erfassung durch mindestens zwei mit dem Eingabemittel gekoppelte Abstandssensoren zur Ermittlung und räumlichen Auflösung der einzelnen physischen Kontakte erfolgt, wobei in Abhängigkeit von der räumlichen Auflösung der Kontakte am Eingabemittel automatisch ein Kontaktsignal generiert wird und die Kontaktsignale zu einem Kontaktdatensatz zusammengefasst werden,
c) der Kontaktdatensatz durch ein Datenverarbeitungssystem verarbeitet wird, wobei in Abhängigkeit vom Inhalt des Kontaktdatensatzes automatisch ein Ausgabedatensatz generiert wird, der mittels einer Wiedergabevorrichtung für die Nutzer des Eingabemittels dargestellt wird, wobei
d) der Ausgabedatensatz Informationen enthält, die automatisch von der räumlichen Position der Kontakte abhängen.

Die Erfindung wird nachfolgend unter Bezugnahme auf die Figuren der Zeichnungen an mehreren Ausführungsbeispielen näher erläutert. Es zeigen:
- Fig. 1: eine schematische Darstellung einer Ausführungsform des erfindungsgemäßen Informationssystems;
- Fig. 2: eine schematische Darstellung des Datenflusses der Ausführungsform gemäß Fig. 1.

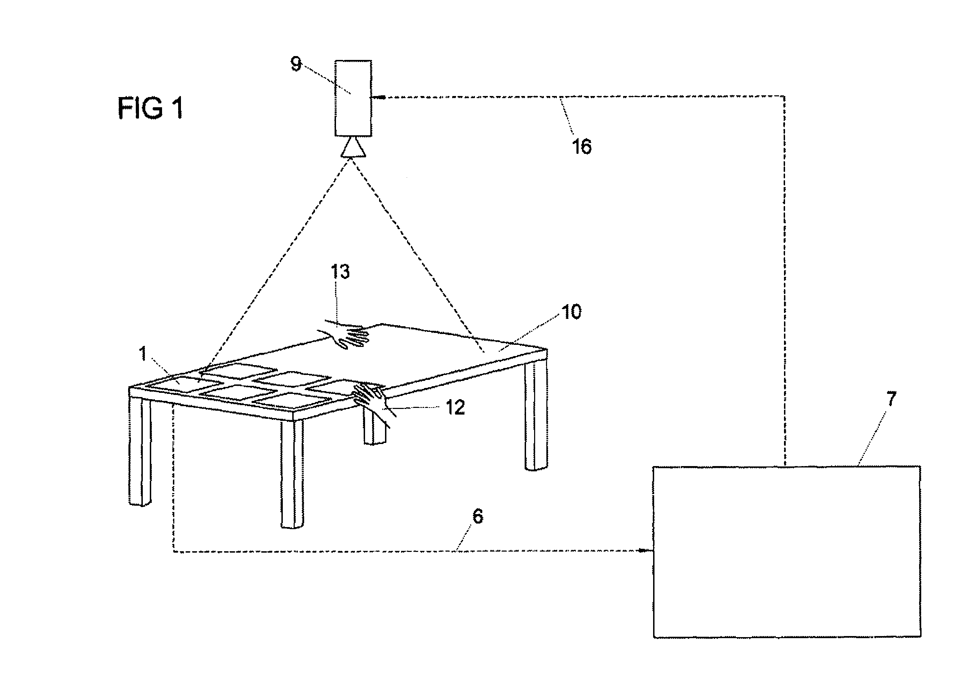

In Fig. 1 ist eine Ausführungsform des erfindungsgemäßen Informationssystems dargestellt, das insbesondere von mehr als einem Nutzer gleichzeitig benutzbar ist.

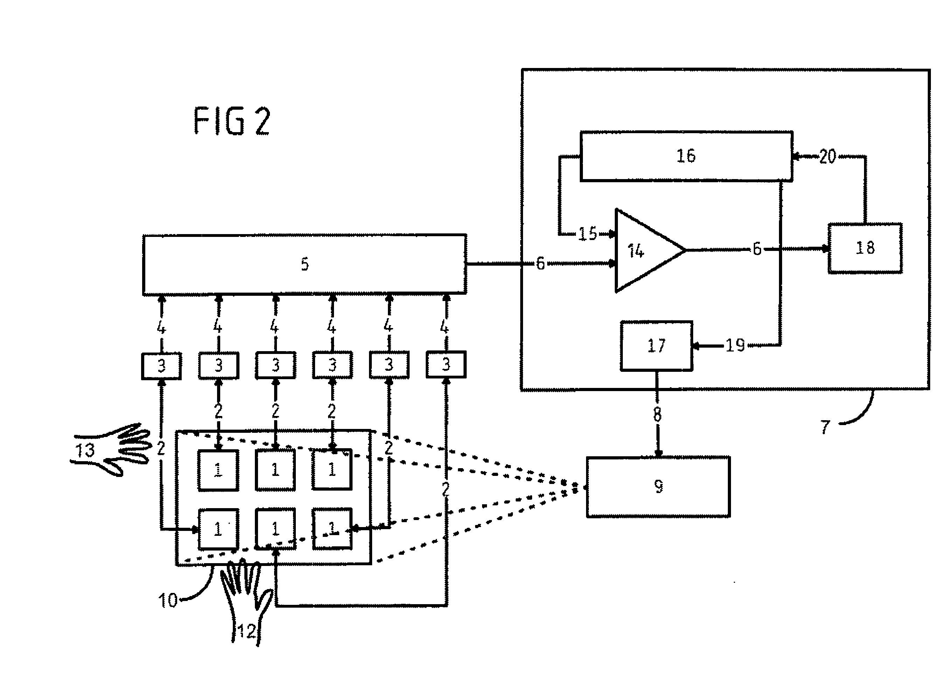

Das Eingabemittel 10 ist hier als Tisch mit einer horizontalen Fläche ausgebildet. Unterhalb der Fläche ist eine Matrix aus Abstandssensoren 1 zur Erfassung von Kontakten 12, 13 von Nutzern des Eingabemittels 10 angeordnet. Die Nutzer stehen in diesem Fall um den Tisch herum und können die horizontale Fläche berühren. Bei der Berührung oder bereits der Annäherung sprechen die Abstandssensoren 1 an und generieren ein Kontaktsignal 2, dessen Verarbeitung in Fig. 2 näher erläutert werden wird.

Ein Kontakt 12, 13 im Sinne dieser Erfindung ist sowohl eine unmittelbare Berührung des Eingabemittels 10 mit einem Körperteil eines Nutzers (z.B. der Handfläche oder der Fingerspitze), als auch eine Annäherung an das Eingabemittel 10 unterhalb eines bestimmten Schwellenwertes. In diesem Sinne sind Abstandssensoren 1 Sensoren, die eine Annäherung unterhalb eines bestimmten Wertes als auch direkten mechanischen Druck registrieren können.

Werden durch die Benutzer mehrere Kontakte 12, 13 des Eingabemittels 10 gleichzeitig ausgelöst, so werden daraus räumlich und zeitlich aufgelöste Kontaktsignale 2 generiert, die in Form eines Kontaktdatensatzes 6 an eine Datenverarbeitungsvorrichtung 7 übermittelt werden.

Die Datenverarbeitungsvorrichtung 7 kennt nun die Stellen, an denen Kontakte 12, 13 ausgelöst wurden und erzeugt in Abhängigkeit davon einen Ausgabedatensatz 16, z.B. einen Bilddatensatz. Dieser Bilddatensatz 16 wird dann über eine Wiedergabevorrichtung 9 (hier eine Anzahl von Beamern) auf das Eingabemittel 10 projiziert.

Auf der Projektionsfläche, hier das Eingabemittel 10 selbst, wird dabei die projektierte Information des Bilddatensatzes an die Koordinaten der auslösenden Kontakte 12, 13 angepasst.

Im Unterschied zu einem Touchscreen können hier mehrere Nutzer das Eingabemittel 10 berühren und bekommen in Abhängigkeit vom Ort der Berührung unterschiedliche Informationen angeboten.

Die hier dargestellte Ausführungsform ist interaktiv, denn die Wiedergabevorrichtung 9 projiziert bestimmte Bilder und Texte auf das Eingabemittel. Berührt nun der Nutzer das Eingabemittel 10 an verschiedenen Stellen, so werden über die Abstandssensoren 1 und die Datenverarbeitungsvorrichtung 7 automatisch Bilddatensätze 16 generiert, die Informationen jeweils an der Stelle anzeigen, die den Kontakten 12, 13 zugeordnet ist. So können viele Nutzer gleichzeitig das System nutzen, so dass eine Art gemeinschaftlicher Touchscreen vorliegt.

Ein solches Eingabemittel 10 kann insbesondere in der Informationsvermittlung, d.h. in Museen, Ausstellungen oder schulischen Einrichtungen eingesetzt werden. Aber auch sind gemeinschaftliche Spiele für mehrere Nutzer denkbar. Ferner kann ein solches System auch im Bereich der Produktwerbung eingesetzt werden.

Ein Beispiel der letzteren Verwendung sei kurz beschrieben. Ein Prokjektionsystem 9 projiziert laufend bewegte Bilder auf eine Fläche 10, die sich über mehrere Räume in einem Ladengeschäft erstreckt. Die bewegten Bilder zeigen fortlaufend unterschiedliche Produkte, die beworben werden. Durch die Größe der Projektionsfläche und die Bewegung wird ein grundsätzlich anderer Effekt erreicht als bei einer Darstellung auf einem Computerbildschirm. Auch ist es möglich, dass mehrere Nutzer sich die Produkte gleichzeitig ansehen können. Da die Fläche gleichzeitig als Eingabemittel 10 mit Abstandssensoren 1 ausgebildet ist, können die Nutzer am Tisch die bewegten Bilder manipulieren, indem sie z.B. den Bilderfluss durch einen Kontakt 12, 13 anhalten, wodurch zusätzliche Informationen zu dem Produkt angezeigt werden. Die Informationen können aus Text, Bildern, Tönen, Videos, Filmen oder anderen medialen Daten bestehen.

Insbesondere durch eine berührungslose Bedienung der Abstandssensoren 1 wird ein besonderes haptisches Erlebnis erzeugt. Man erzeugt einen Kontakt 12, 13 der räumlich genau erfasst wird, ohne das Eingabemittel 10 direkt zu berühren.

Im vorliegenden Fall ist das Eingabemittel 10 ein horizontaler Tisch, da dies für viele Anwendungen vorteilhaft ist. Grundsätzlich sind aber auch vertikal angeordnete Eingabemittel 10 denkbar. In diesem Fall ist es zur Vermeidung von Schattenwürfen bei der Projektion sinnvoll, mit einer Rückprojektion zu arbeiten, wobei die Abstandssensoren 1 und ggf. andere Teile der Sensorvorrichtung transparent ausgebildet sein müssten.

Durch die Verwendung von Projektionen wird erreicht, dass grundsätzlich beliebig große und beliebig geformte Flächen als Wiedergabefläche verwendet werden. Damit fallen die bestehenden Größenbeschränkungen von Bildschirmen weg. Grundsätzlich könnten auch gekrümmte Flächen oder kugelige Flächen als Eingabemittel 10 und / oder Projektionsfläche verwendet werden.

Auch wird in der vorliegenden Ausführungsform das Eingabemittel 10, d.h. die horizontale Tischfläche als Projektionsfläche verwendet. Dies ist nicht zwingend der Fall. Die Kombination von Eingabe- und Projektionsfläche erhöht aber den interaktiven Effekt.

In Zusammenhang mit Fig. 2 wird der Datenfluss der Ausführungsform gemäß Fig. 1 näher beschrieben.

Die Abstandssensoren 1 sind dabei als elektrische Feldemitter ausgebildet, die in Form einer Matrix im Eingabemittel 10 angeordnet sind. Die Kontakte 12, 13 zweier Benutzer sind hier schematisch dargestellt.

Wird von einem Abstandssensor 1 ein Kontakt (d.h. eine direkte Berührung oder die Unterschreitung eines Schwellenwertes) registriert, wird automatisch vom betreffenden Abstandssensor 1 ein Kontaktsignal 2 erzeugt, das über eine abgeschirmte Leitung zu einer aktiven Messelektronik 3 übertragen wird.

Der als Feldemitter ausgebildete Abstandssensor kann grundsätzlich in zwei Weisen auf die Annäherung eines Körperteils eines Nutzers reagieren:
a) Die Annäherung des Körperteils führt zu einer Verzerrung der vom Feldemitter emittierten Feldlinien in der Umgebung des Abstandssensors. Aus der Größe der Veränderung ergibt sich das Maß der Annäherung.
   Ein kapazitiver Näherungsschalter dieser Art bildet z.B. einen RC-Schwingkreis aus, dessen Stimmung durch die Änderung der dielektrischen Eigenschaften der Umgebung, d.h. eine Abweichung von der Dielektrizität der Luft, verändert wird.
b) Der Feldemitter sendet elektromagnetische Wellen aus (z.B. Mikrowellen, Infrarot), die vom sich nähernden Körperteil reflektiert werden und vom Abstandssensor 1 registriert werden.

Grundsätzlich können aber auch andere Bauformen von Abstandssensoren 1 verwendet werden, z.B. Sensoren, die auf eine direkte Berührung, d.h. auf Druck oder eine Änderung der Leitfähigkeit reagieren. Auch können Abstandssensoren 1 unterschiedlicher Bauform verwendet werden.

Die in einer Matrix angeordneten Abstandssensoren 1 sind für eine hohe Auflösung dicht gepackt im Eingabemittel 10 angeordnet. Zur Verhinderung einer gegenseitigen Störung werden die Messungen durch die Messelektronik 3 in Zeitscheiben durchgeführt. So werden in einem Intervall z.B. alle Reihen einer Matrix mit geraden Zeilennummern, im nächsten Intervall alle Reihen mit ungeraden Zeilennummern ausgelesen. Dadurch wird auf elektronische Art und Weise ein Abstand erzeugt, der verhindert, dass sich überschneidende Detektionsvolumina der Abstandssensoren 1 gleichzeitig ausgelesen werden.

Auch werden die Abstandssensoren 1 untereinander elektrisch isoliert, um eine Verwischung der Signale zu vermeiden.

Die von der Messelektronik 3 erfassten Messsignale 4 werden an einen Konzentrator 5 übermittelt.

Der Konzentrator 5 nimmt die Messsignale 4 eines Abstandsensors 1 analog oder vorzugsweise als digital codierte Daten entgegen und speichert sie in einem digitalen Speicher, dessen Inhalt einem Datenverarbeitungssystem 7 (Simulationsystem) zugänglich gemacht wird.

Es ist vorteilhaft, wenn der Konzentrator 5 nur diejenige Daten nur dann dem Datenverarbeitungssystem 7 zugänglich macht oder sie an dieses übermittelt, wenn die Differenz zu einem Normalwert einen bestimmten Schwellwert überschreitet. Es ist noch vorteilhafter, wenn der Normalwert automatisch an einen Durchschnittswert einer grösseren Zahl von Messungen an den Abstandssensoren angepasst wird, wenn die Messwerte sich sich für eine gewisse Zeit innerhalb eines kleinen Ausschnitts des Wertebereichs befindet (Autokalibrierung).

Der Konzentrator 5 erstellt einen Kontaktdatensatz 6. In diesem Datensatz sind die räumlichen und zeitlichen Informationen über Kontaktereignisse auf dem Eingabemittel 10 enthalten

Der Kontaktdatensatz 6 wird an die Datenverarbeitungsanlage 7 übertragen, die als Simulations- und Bilderzeugungssystem ausgebildet ist.

Der Kontaktdatensatz 6 wird dabei zunächst von einem Auswertemittel 14 verarbeitet. Dabei geht es darum, festzustellen, an welcher Stelle ein Kontakt 12, 13 stattgefunden hatte und was an dieser Stelle gerade angezeigt wurde (siehe Beschreibung des interaktiven Systems in Zusammenhang mit Fig. 1). Die Anzeigeinformation 15 wird aus einem Content-Speicher 16 geholt, der die digital gespeicherten Geometrieinformationen und denen zugeordnete Inhalte aufweist. Das Auswertemittel 14 erkennt somit, was an der Kontaktstelle angezeigt wurde und kann nun automatisch ermitteln, was in Reaktion darauf angezeigt werden soll.

Mittels einer Simulationseinheit 18 wird daraus eine Abfrage 20 an den Content-Speicher 16 gesandt, der nunmehr der Kontaktposition zugeordnete Daten 19 ermittelt und an das Bildsignalerzeugungssystem 17 übermittelt.

Die Simulationseinheit 18 liest und modifiziert periodisch (in der Regel ca. 30 mal/Sekunde oder öfter) Werte im Content-Speicher 16, bespielsweise die Position oder die Farbe eines geometrischen Objekts, wie eines Rechtecks, das als virtuelles berührungssentives Objekt fungiert. Das Objekt wird etwa von der Simulationseinheit 18 über die Bildfläche, hier in der Projektion auf das Eingabemittel 10, bewegt, in dem bei jedem Zeitschritt der Geschwindigkeitsvektor des Objekt multipliziert mit der Dauer des Zeitschritt zur Position des Objekt hinzuaddiert wird. Genauso kann auch die Farbe, Orientierung oder Transparenz des Objekts verändert werden, oder der Geschwindigkeitvektor abhängig von einer Begrenzungsgeometrie verändert werden, damit das Objekt einen bestimmten Bereich nicht verlässt, oder zu einer bestimmten Position hingezogen werden. Dazu gibt es noch Zustandswerte, die etwa definieren, ob ein Objekt überhaupt durch Benutzereingaben beeinflussbar ist. Die Sensorwerte selbst gehen ebenfalls als Parameter in die Simulation ein. So kann dann etwa programmiert werden, das bei Annäherung der Hand an ein simuliertes Objekt dieses flüchtet oder sich öffnet und seinen Inhalt offenbart.

Die Simulationseinheit ist also im wesentlichen ein Integrator, der Parameter der Simulationsobjekte mit jeder Zeitscheibe verändert, so das etwa der Eindruck einer Bewegung bei der Wiedergabe eines Ausgabedatensatzes 8 entsteht.

Das Bildsignalerzeugungssystem 17 erzeugt einen Ausgabedatensatz 8, der über ein Wiedergabegerät 9 auf die Eingabefläche 10 projiziert wird.

Die Erfindung beschränkt sich in ihrer Ausführung nicht auf die vorstehend angegebenen bevorzugten Ausführungsbeispiele. Vielmehr ist eine Anzahl von Varianten denkbar, die von dem erfindungsgemäßen Informationssystem und dem interaktiven Verfahren zur auch bei grundsätzlich anders gearteten Ausführungen Gebrauch machen.

### Bezugszeichenliste

- 1: Abstandssensor
- 2: Kontaktsignal
- 3: Messelektronik
- 4: Messsignal
- 5: Konzentrator
- 6: Kontaktdatensatz
- 7: Datenverarbeitungssystem
- 8: Bilddatensatz
- 9: Wiedergabevorrichtung
- 10: Eingabemittel
- 12: erster physischer Kontakt eines Nutzers
- 13: zweiter physischer Kontakt eines Nutzers
- 14: Auswertemittel
- 15: Anzeigeinformation
- 16: Content-Speicher
- 17: Bildsignalerzeugungsmittel
- 18: Simulationseinheit
- 19: Kontaktposition zugeordneter Daten
- 20: Abfrage

## Patentansprüche

1. Interaktives Informationssystem,
**gekennzeichnet durch**
a) ein Eingabemittel (10) zur gleichzeitigen Registrierung mindestens zweier physischer Kontakte (12, 13), insbesondere eine definierte Annäherung an das Eingabemittel oder einer Berührung mindestens eines Nutzers mit dem Eingabemittel (10),
b) mindestens zwei mit dem Eingabemittel (10) gekoppelte Abstandssensoren (1) zur Ermittlung und räumlichen Auflösung der einzelnen physischen Kontakte (12, 13) am Eingabemittel (10), wobei in Abhängigkeit von der räumlichen Auflösung der Kontakte (12, 13) am Eingabemittel (10) automatisch ein Kontaktsignal (2) generiert wird und die Kontaktsignale (2) zu einem Kontaktdatensatz (6) zusammengefasst werden,
c) ein Datenverarbeitungssystem (7) zur Verarbeitung des Kontaktdatensatzes (6), wobei in Abhängigkeit vom Inhalt des Kontaktdatensatzes (6) automatisch ein Ausgabedatensatz (8) generiert wird, der mittels einer Wiedergabevorrichtung (9) für die Nutzer des Eingabemittels (10) darstellbar ist, wobei der Ausgabedatensatz (8) Informationen enthält, die automatisch von der räumlichen Position der Kontakte (12, 13) abhängen;
d) eine Wiedergabevorrichtung (9) für den Ausgabedatensatz (8), wobei die Wiedergabe des Ausgabedatensatzes (8) zumindest teilweise auf dem Eingabemittel (10) erfolgt.

2. Interaktives Informationssystem nach Anspruch 1, **dadurch gekennzeichnet, dass** mindestens ein Abstandssensor (1) ein Kontaktsignal (2) auslöst, wenn ein Körperteil eines Nutzers eine bestimmte Distanz zum Abstandssensor (1) unterscheidet, insbesondere wenn ein direkter Kontakt erfolgt.

3. Interaktives Informationssystem nach mindestens einem der Ansprüche 1 oder 2, **dadurch gekennzeichnet, dass** mindestens ein Abstandssensor (1) als kapazitiver Sensor ausgebildet ist.

4. Interaktives Informationssystem nach mindestens einem der vorhergehenden Ansprüche, **dadurch gekennzeichnet , dass** mindestens ein Abstandssensor (1) den Abstand zu einem Körperteil des Nutzers mittels elektromagnetischer Strahlung ermittelt.

5. Interaktives Informationsssystem nach mindestens einem der vorhergehenden Ansprüche, **dadurch gekennzeichnet , dass** mindestens ein Abstandssensor (1) als Sensor für die direkte Berührung (12, 13) mit einem Körperteil des Benutzers ausgebildet ist.

6. Interaktives Informationssystem nach mindestens einem der vorhergehenden Ansprüche, **dadurch gekennzeichnet , dass** mindestens zwei Abstandssensoren (1) zur Verminderung der gegenseitigen Beeinflussung elektrisch gegeneinander abgeschirmt sind.

7. Interaktives Informationssystem nach mindestens einem der vorhergehenden Ansprüche, **dadurch gekennzeichnet , dass** die Kontaktsignale (2) mindestens zweier räumlich nahe beieinander liegender, insbesondere benachbarter Abstandssensoren (1) zur Verbesserung der räumlichen Auflösung der Kontakte (12, 13) zeitlich versetzt auslesbar sind.

8. Interaktives Informationssystem nach mindestens einem der vorhergehenden Ansprüche, **dadurch gekennzeichnet , dass** mit mindestens einem Abstandssensor (1) die Geschwindigkeit oder Beschleunigung eines Körperteils eines Nutzers relativ zum Eingabemittel (10) erfassbar ist.

9. Interaktives Informationssystem nach mindestens einem der vorhergehenden Ansprüche, **dadurch gekennzeichnet , dass** die Abstandssensoren (1) im Eingabemittel (10) in Form einer Matrix angeordnet sind.

10. Interaktives Informationssystem nach mindestens einem der vorhergehenden Ansprüche, **dadurch gekennzeichnet , dass** das Eingabemittel (10) eine horizontale Fläche, vertikale Fläche und / oder eine gekrümmte Fläche aufweist, wobei die Abstandssensoren (1) an oder in dieser Fläche angeordnet sind.

11. Interaktives Informationssystem nach mindestens einem der vorhergehenden Ansprüche, **dadurch gekennzeichnet , dass** der Ausgabedatensatz (16), insbesondere ein Bilddatensatz, zumindest teilweise auf das Eingabemittel (10) projizierbar ist.

12. Interaktives Informationssystem nach mindestens einem der vorhergehenden Ansprüche, **dadurch gekennzeichnet , dass** der Ausgabedatensatz (16) mittels Rückprojektion zumindest teilweise auf das Eingabemittel (10) projizierbar ist.

13. Verfahren zur interaktiven Informationseingabe, bei dem
a) mindestens zwei physische Kontakte (12, 13) mindestens eines Nutzers an einem Eingabemittel (10) erfasst werden, wobei
b) die Erfassung durch mindestens zwei mit dem Eingabemittel (10) gekoppelte Abstandssensoren (1) zur Ermittlung und räumlichen Auflösung der einzelnen physischen Kontakte (12, 13) erfolgt, wobei in Abhängigkeit von der räumlichen Auflösung der Kontakte (12, 13) am Eingabemittel (10) automatisch ein Kontaktsignal (2) generiert wird und die Kontaktsignale (2) zu einem Kontaktdatensatz (6) zusammengefasst werden,
c) der Kontaktdatensatz (6) durch ein Datenverarbeitungssystem (7) verarbeitet wird, wobei in Abhängigkeit vom Inhalt des Kontaktdatensatzes (6) automatisch ein Ausgabedatensatz (8) generiert wird, der mittels einer Wiedergabevorrichtung (9) für die Nutzer des Eingabemittels (10) dargestellt wird, wobei
d) der Ausgabedatensatz (8) Informationen enthält, die automatisch von der räumlichen Position der Kontakte (12, 13) abhängen.
